(19) Europäisches Patentamt
European Patent Office
Office européen des brevets

(11) **EP 1 456 966 B1**

(12) **EUROPEAN PATENT SPECIFICATION**

(45) Date of publication and mention of the grant of the patent:
**10.06.2009 Bulletin 2009/24**

(51) Int Cl.:
**H04W 52/40** *(2009.01)*  **H04W 24/00** *(2009.01)*
**H04L 12/28** *(2006.01)*  **H04B 7/02** *(2006.01)*
**H04W 52/12** *(2009.01)*

(21) Application number: **02788360.2**

(22) Date of filing: **16.12.2002**

(86) International application number:
**PCT/IB2002/005408**

(87) International publication number:
**WO 2003/052966 (26.06.2003 Gazette 2003/26)**

(54) **METHOD AND APPARATUS FOR QUALITY MEASURE TARGET VALUE BASED SITE SELECTON DIVERSITY**

VERFAHREN UND VORRICHTUNG ZUR STANDORTAUSWAHLDIVERSITÄT UNTER VERWENDUNG VON ZIELWERTEN FÜR EIN QUALITÄTSMASS

PROCEDE ET DISPOSITIF POUR DIVERSITE DE SELECTION DES SITES A BASE DE VALEURS CIBLE DE MESURE DE QUALITE

(84) Designated Contracting States:
**AT BE BG CH CY CZ DE DK EE ES FI FR GB GR IE IT LI LU MC NL PT SE SI SK TR**

(30) Priority: **17.12.2001 US 21541**

(43) Date of publication of application:
**15.09.2004 Bulletin 2004/38**

(73) Proprietor: **Marvell D.S.P.C. Ltd.**
**49527 Pethach Tikva (IL)**

(72) Inventors:
• **SMOLYAR, Lev**
  **32887 Haifa (IL)**

• **BERGEL, Itzhak**
  **Givat-Shmuel (IL)**

(74) Representative: **Dunlop, Hugh Christopher et al**
**R.G.C. Jenkins & Co.**
**26 Caxton Street**
**London SW1H 0RJ (GB)**

(56) References cited:
**EP-A- 0 715 423**   **WO-A-00/65748**
**WO-A-01/01602**   **WO-A-01/20808**
**DE-A- 19 909 299**   **US-A- 6 167 282**

EP 1 456 966 B1

**Description**

BACKGROUND OF THE INVENTION

Power control methods are often implemented within wireless communication systems to minimize transmission power while still maintaining a desired communication performance level. In one popular power control technique, a nested loop structure having an outer loop and an inner loop is used to control transmit power. In the outer loop, the block error rate (BLER) of received data is monitored and compared to a desired BLER. A signal to interference ratio (SIR) target is then developed for the receiver based on the comparison. In the inner loop, a measured SIR for a received signal is compared to the SIR target. A power control message may then be generated for delivery to the transmitter based on the result of the SIR comparison (e.g., indicating whether transmit power modifications are desirable). A problem with this power control technique (and other similar methods) is that the BLER measurement is relatively slow and, therefore, the transmit power is not able to adapt quickly to changes in channel conditions. As can be appreciated, this may result in poor communication quality in a communication system having a non-fixed channel.

One such power control method and apparatus is disclosed in WO 01/20808 A (ERICSON TELEFON).

A site selection method and apparatus is disclosed in US-A-6 167 282.

SUMMARY OF THE INVENTION

It is an object of the present invention to provide a communication method or apparatus in which the control of power and site selection diversity are substantially improved.

According to another aspect of the present invention there is provided a communication apparatus as claimed in claim 1.

According to one aspect of the present invention there is provided a method within a communication system as claimed in claim 18.

BRIEF DESCRIPTION OF THE DRAWINGS

Fig. 1 is a block diagram illustrating a prior art communication apparatus that is capable of performing power control functions;
Fig. 2 is a block diagram illustrating a communication apparatus in accordance with an embodiment of the present invention;
Fig. 3 is a block diagram illustrating one possible implementation of the apparatus of Fig. 2;
Fig. 4 is a block diagram illustrating a communication apparatus that is adapted for use within a cellular system implementing code division multiple access (CDMA) techniques in accordance with an embodiment of the present invention; and
Fig. 5 is a block diagram illustrating a communication apparatus that uses SIR target information to perform SSDT functions in accordance with an embodiment of the present invention.

DETAILED DESCRIPTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The present invention relates to methods and structures for updating a quality measure target value (e.g., an SIR target) in a communication system based on channel conditions. The methods and structures are capable of providing a relatively rapid response to changing channel conditions in the system. In a power control scenario, the use of channel condition information to update the quality measure target value can result in rapid convergence in a power control loop by eliminating the need to wait for corresponding error rate information. Error rate information may then be used to refine the quality measure target value when the error rate information is available. The methods and structures for updating a quality measure target value also have application in systems and devices that include a site selection diversity transmit (SSDT) mode of operation. The inventive principles may be used in a variety of different wireless communication system applications. The inventive principles are particularly beneficial in systems having channels that can change quickly with time (e.g., mobile communication systems).

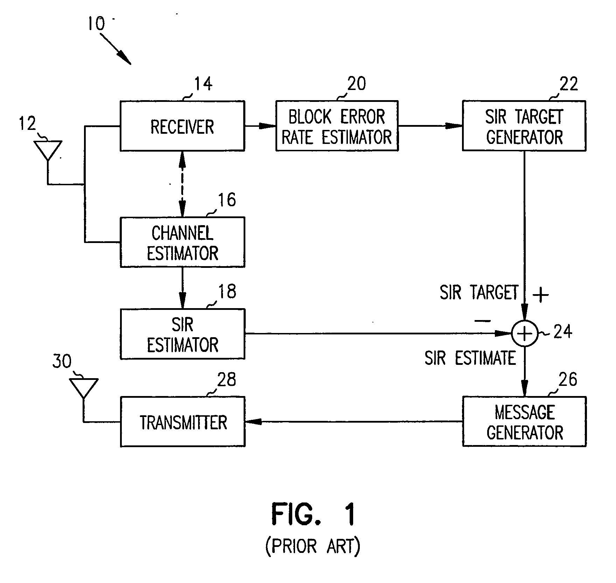

Fig. 1 is a block diagram illustrating a prior art communication apparatus 10 that is capable of performing power control functions. As illustrated, the communication apparatus 10 includes: a receive antenna 12, a receiver 14, a channel estimator 16, an SIR estimator 18, a block error rate estimator 20, an SIR target generator 22, a comparison unit 24, a message generator 26, a transmitter 28, and a transmit antenna 30. A communication signal is received from a remote transceiver, via a wireless communication channel, at receive antenna 12. The received signal is delivered to the receiver 14 and the channel estimator 16. The receiver 14 processes the received signal and converts it to a baseband representation. The channel estimator 16 processes the received signal to estimate channel parameters for the wireless channel. The block error rate estimator 20 receives the baseband information from the receiver 14 and uses the information to determine a block error rate (BLER) for the communication apparatus 10.

The SIR target generator 22 generates an SIR target for the communication apparatus 10 based on the estimated BLER determined by the block error rate estimator 20 and a desired BLER of the apparatus 10. The SIR estimator 18 estimates an SIR of the received signal using channel parameters determined by the channel estimator 16. The comparison unit 24 compares the estimated SIR to the SIR target generated by the SIR target generator 22 and outputs a comparison result to the message generator 26. The message generator 26 then generates a power control message based on the comparison result. The transmitter 28 and transmit antenna 30 are then used to transmit the message to the remote transceiver through a wireless channel. The message may include, for example, a request to increase or decrease the transmit power by a fixed amount. The receive and transmit antennas 12, 30 may be replaced by a single antenna with the addition of appropriate duplexing functionality.

Because error rates in communication systems are typically small, the process of measuring the BLER of received information will typically be relatively slow. That is, the convergence time will be at least on the order of 1/BLER. Thus, the SIR target that is generated by the SIR target generator 22 will typically be slow to react to changes in channel condition. For this reason, when channel conditions change, there may be periods during which the apparatus 10 is attempting to maintain an SIR (i.e., the SIR target) that is inadequate for achieving the desired BLER of the apparatus 10.

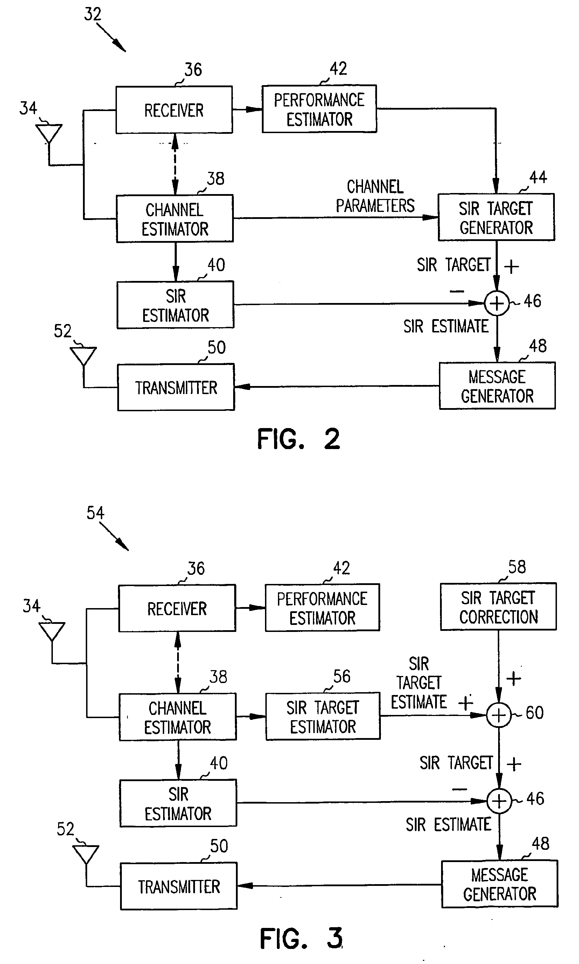

Fig. 2 is a block diagram illustrating a communication apparatus 32 in accordance with an embodiment of the present invention. As will be described in greater detail, the communication apparatus 32 is capable of updating an SIR target relatively quickly m response to a changing channel. The communication apparatus 32 may be implemented as any form of communication device or subsystem that may be used within a wireless communication system including, for example, a handheld communicator, a cellular base station transceiver, a satellite uplink, downlink, or crosslink transceiver, a transceiver within a terrestrial wireless link, a local multipoint distribution system (LMDS) or multipoint multichannel distribution system (MMDS) transceiver, a two-way radio, transceivers within wireless local area networks (LANs), metropolitan area networks (MANs), and wide area networks (WANs), wireless local loop transceivers, and others. As illustrated, the communication apparatus 32 includes: a receive antenna 34, a receiver 36, a channel estimator 38, an SIR estimator 40, a performance estimator 42, an SIR target generator 44, a comparison unit 46, a message generator 48, a transmitter 50, and a transmit antenna 52. Unlike the corresponding block within apparatus 10 of Fig. 1, the SIR target generator 44 of Fig. 2 uses channel parameters estimated by the channel estimator 38 to develop the SIR target. Performance information estimated by the performance estimator 42 (e.g., block error rate) may also be used by the SIR target generator 44 to develop the SIR target. By using channel parameters to develop the SIR target, the target is able to adapt quickly to changes in channel conditions before corresponding performance information has been measured. As before, the SIR of a receive signal is estimated by an SIR estimator 40 and is compared to the SIR target. A message may then be generated and delivered to a remote transceiver based on the comparison result.

It should be appreciated that the blocks illustrated in Fig. 2 (and in other block diagrams referred to herein) are functional in nature and do not necessarily represent discrete hardware elements. For example, in at least one embodiment, one or more of the blocks are implemented in software within a single (or multiple) digital processing device(s) in the apparatus 32. This may include, for example, a general purpose microprocessor, a digital signal processor (DSP), a reduced instruction set computer (RISC), a complex instruction set computer (CISC), a field programmable gate array (FPGA), an application specific integrated circuit (ASIC), and/or others, as well as combinations of the above.

The performance estimator 42 may estimate any type of performance information that may be useful for determining the SIR target value. This may include, for example, block error rate, bit error rate, symbol error rate, and other performance measures. The channel estimator 38 may estimate any form of channel information that may be needed by the SIR target generator 44 to determine an SIR target value. This may include, for example, the number of paths in the channel, the path strengths, mobile velocity, path fading rates, symbol energy variances, variances between symbols of different blocks, variance of total block energy, and/or others. In addition to the channel parameters used by the SIR target generator 44, the channel estimator 38 may also estimate any other channel parameters that may be required by the SIR estimator 40 or other functions within the communication apparatus 32.

In the illustrated embodiment, the comparison unit 46 is shown as a difference unit that determines a difference between the SIR target and the SIR estimate. Other comparison techniques and/or structures may alternatively be used (e.g., a ratio unit, etc.). When a difference unit is used, the message generator 48 may use the sign (and possibly the magnitude) of the difference to develop the message for delivery to the remote transceiver. For example, if the difference is negative, then the SIR estimate is larger than the SIR target and the message generator may generate a message requesting the remote transceiver to reduce the transmit power by a fixed amount (e.g., 1 decibel (dB)). If the difference is positive, then the SIR estimate is less than the SIR target and the message generator may generate a message requesting the remote transceiver to increase the transmit power by a fixed amount. The message generator 48 may alternatively require the magnitude of the difference to exceed a threshold level before a change in transmit power is requested. As will be appreciated, many alternative methods for developing a power control message can also be used. For example, the message generator 48 may simply send the difference information to the remote transceiver and let the remote transceiver make the power control decision based thereon. Similarly, the message generator 48 may send the SIR estimate and SIR target information to the remote transceiver, dispensing with the need for a comparison unit 46 within the communication apparatus 32. As will be appreciated, many other techniques for delivering power control information to a remote transceiver are also possible.

Fig. 3 is a block diagram illustrating a communication apparatus 54 that represents one possible implementation of the apparatus 32 of Fig. 2. As illustrated, an SIR target estimator 56 is provided to estimate the SIR target based on channel parameters developed by the channel estimator 38. An SIR target correction unit 58 is also provided to correct the estimate made by the SIR target estimator 56 when corresponding performance information (e.g., error rate information) is made available. A combination unit 60 combines the estimated SIR target with the correction information to generate the actual SIR target. In the illustrated embodiment, the combination unit 60 determines the sum of the estimated SIR target and the correction term. Many alternative combination techniques and/or structures can also be used.

In at least one embodiment of the invention, the performance estimator 42 determines the BLER of the receiver 36 for use by the SIR target correction unit 58 in developing the correction term. In general, the actual BLER of a wireless communication device will depend upon the format parameters of signals in the system (e.g., coding schemes, block length, etc.), the channel parameters, and the SIR target of the device (or another quality measure target value). Therefore, if the format parameters and desired BLER are known, it is theoretically possible to calculate the SIR target using the present channel parameters. Often, however, the function describing the relationship between the format parameters, the channel parameters, the BLER, and the SIR target is difficult to obtain, but many good approximations can be derived. In at least one implementation, the SIR target estimator 56 uses one of these approximations to determine the SIR target estimate.

Because the approximation is often relatively easy to calculate once the estimated channel parameters have been determined, the estimated SIR target can react quickly to changes in channel conditions. Once error information is available, the SIR target correction unit 58 can use the error information to correct the SIR target estimate. Thus, a relatively accurate SIR target value is available shortly after a change in channel conditions for use in achieving a desired error rate, even though corresponding measured error rate information has not yet been obtained. Thus, situations where a grossly inadequate SIR target value is used for an extended duration after a change in channel condition may be avoided. It should be appreciated that the SIR target approximation function will improve system timing even when the resulting estimates are not perfectly accurate. The fact that even some of the SIR target error is compensated by the approximation will decrease the correction term required from the SIR target correction unit 58, thus resulting in a shorter convergence time. In general, the more accurate the SIR target approximation is, the shorter the resulting convergence time will be. In at least one embodiment of the invention, the SIR target estimator 56 is used without an SIR target correction unit 58 (i.e., no correction based on measured performance level are made).

In one implementation, the SIR target estimator 56 approximates the SIR target using the following equation:

$$\text{SIR target} = C + D * \sigma^2$$

where $\sigma^2$ is the variance of the total block energy (i.e., the amount of energy received on all of the code block symbols) and C and D are variables that depend upon parameters that are known a priori (e.g., coding scheme, bit rate, desired BLER, etc.). The variance $\sigma^2$ can be measured directly by the channel estimator 38 or it can be computed from other estimated channel parameters. In one approach, values for C and D are stored within a lookup table in the communication apparatus 54 and appropriate values are retrieved when needed.

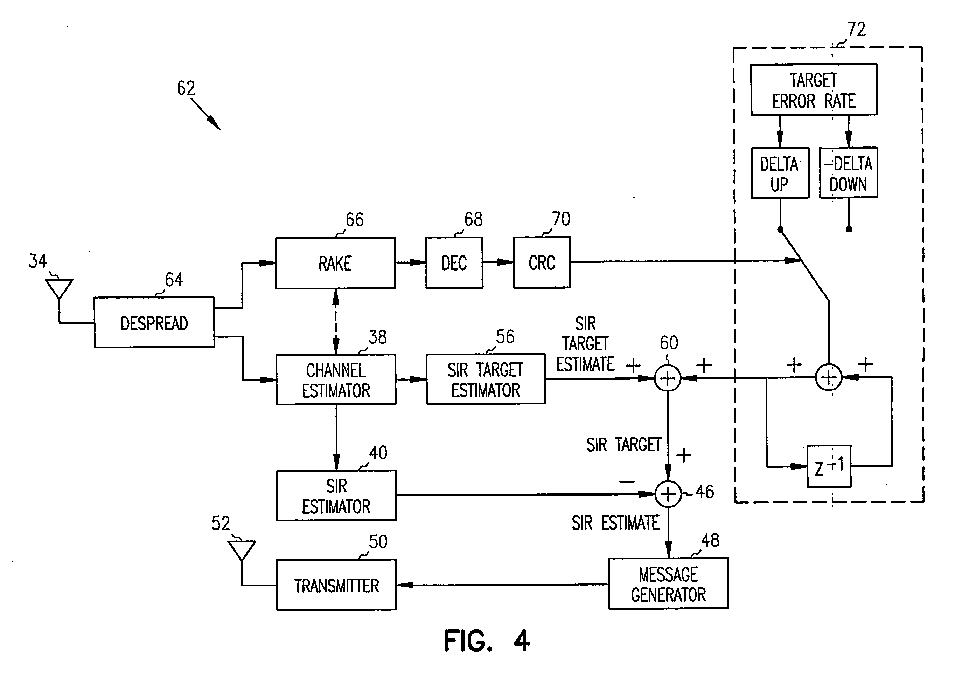

Fig. 4 is a block diagram illustrating a communication apparatus 62 in accordance with another embodiment of the present invention. The communication apparatus 62 is adapted for use within a cellular-type system implementing code division multiple access (CDMA) techniques. The communication apparatus 62 may be implemented as either a mobile communicator or a base station transceiver within the cellular-type system. As illustrated, the apparatus 62 includes: a receive antenna 34, a despreader 64, a rake receiver 66, a channel estimator 38, an SIR estimator 40, a decoder 68, a cyclic redundancy check (CRC) unit 70, an SIR target estimator 56, an SIR target correction unit 72, a combination unit 60, a comparison unit 46, a message generator 48, a transmitter 50, and a transmit antenna 52. When the apparatus 62 is implemented as a mobile communicator, the receive antenna 34 will receive spread spectrum CDMA signals from one or more remote base stations. The despreader 64 despreads one or more of the signals using CDMA techniques. The channel estimator 38 then processes the despread information to estimate channel parameters for the corresponding channel. The SIR estimator 40 then estimates an SIR of the received signal using channel parameters determined by the channel estimator 38. The SIR target estimator 56 estimates an SIR target value based on channel parameters determined by the channel estimator 38. The SIR target value is delivered to the combination unit 60.

The rake receiver 66 isolates various multipath components associated with a particular base station and combines them coherently. The decoder 68 decodes the resulting signal. The CRC 70 uses decoded signal information from the decoder 68 to detect and quantify CRC errors (e.g., as percentage of CRC errors) within the apparatus 62. The SIR target correction unit 72 updates a SIR target correction term according to each CRC result. A correct CRC will cause a decrease in the correction term by the constant DELTA_UP, while an error CRC will cause an increase in the correction term by the constant DELTA_DOWN. As described previously, the SIR target estimator 56 will typically respond quickly to changes in channel conditions. The SIR target correction unit 72 will then update the SIR target estimate once error information is available. The estimated SIR target is combined with the correction term in the combination unit 60 and the resulting SIR target is compared with the SIR estimate in the comparison unit 46. The message generator 48 then generates a message based upon the comparison results and the message is transmitted to the remote base station using the transmitter 50 and transmit antenna 52. A similar approach may be used when the communication apparatus 62 is implemented as a cellular base station, although the receive antenna 34 will receive CDMA signals from one or more remote users rather than one or more remote base stations.

In at least one aspect of the present invention, SIR target calculations are used within a cellular-based communication system to support a site selection diversity transmit (SSDT) mode of operation. In this mode of operation, a mobile communicator is capable of choosing which one of a number of different base stations will transmit to it at a particular time. For example, when the channel from one base station is fading, a mobile operating in SSDT mode can switch to another base station whose channel is not fading. During the transition from one base station to another, the channel conditions of the new base station are often completely different from the channel conditions of the previous base station. If the SIR target of the previous base station were used with the new base station, therefore, a relatively large SIR target error could result. Using the inventive principles, however, a relatively quick adjustment of the SIR target value can be made based on the channel condition of the new base station. In one approach, for example, a mobile keeps track of the channel conditions of each candidate base station during normal operation. Thus, an approximate SIR target value for a new base station may be available for use at the time the new base station is selected (or slightly after). Even if the channel conditions of the other base stations are not tracked, the quick response of the inventive SIR target calculation will typically hasten convergence for the new base station significantly.

In the past, mobiles operating in SSDT mode would typically select a base station based on the total power received from each candidate base. However, the performance of a receiver (e.g., BLER, etc.) may not be a function of receive power alone, but may also be a function of other channel parameters. Disregarding this fact can result in a transition to a base station that has a higher received power, but which results in a lower performance level. Therefore, in at least one embodiment of the invention, a system is provided that uses SIR target values that are calculated using estimated channel parameters as part of an SSDT-type base station selection criterion.

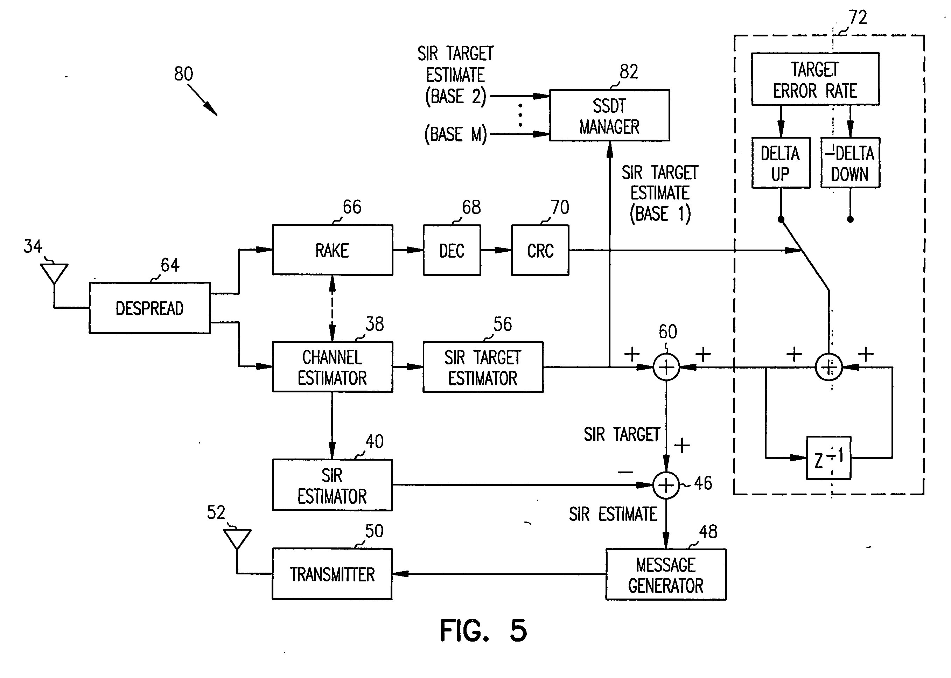

Fig. 5 is a block diagram illustrating a communication apparatus 80 that uses SIR target information to perform SSDT functions in accordance with an embodiment of the present invention. As illustrated, the apparatus 80 is similar to the-apparatus 62 of Fig. 4; however, an SSDT manager 82 has been added. As shown, the SSDT manager 82 receives the present SIR target estimate from the SIR target estimator 56 for a base station (i.e., BASE 1) that is currently being tracked by the channel estimator 38. The SSDT manager 82 also receives SIR target estimates from SIR target estimators in the apparatus 80 that are associated with one or more other base stations (e.g., BASE 2 - BASE M in Fig. 5). These other SIR target estimates are developed within other receive channels in the apparatus 80 that are the same as or similar to the one illustrated. The SSDT manager 82 uses the target estimates to select one of the base stations to act as the servicing base station for the apparatus 80. In addition to the SIR target estimates, the SSDT manager 82 may also consider other criteria as part of the base station selection process (e.g., total received power level of each base, etc.).

Instead of the SIR target estimates generated in the SIR target estimators 56, the SSDT manager 82 may use the corrected SIR target information output by the combination unit 60 (or other related information). Because the SIR target estimates (or the corrected SIR target information) will typically respond quickly to corresponding changes in channel conditions, the SSDT manager 82 may be capable of dynamically selecting an optimal base station in near real time. This approach to base station selection can also be implemented in non-CDMA based cellular systems. In the apparatus 80 of Fig. 5, SIR target estimates are used as part of the SSDT base station selection process in an apparatus that also implements power control. It should be appreciated that these techniques can also be used in apparatuses that do not use power control.

In the embodiments described above, signal to interference ratio (SIR) is used as a communication quality measure. It should be appreciated that other measures of communication quality can alternatively be used in accordance with the present invention including, for example, signal to noise ratio (SNR), signal to interference and noise ratio (SINR), bit error rate, signal power, and others.

Although the present invention has been described in conjunction with certain embodiments, it is to be understood that modifications and variations may be resorted to without departing from the scope of the invention as those skilled in the art readily understand. Such modifications and variations are considered to be within the purview and scope of the invention and the appended claims.

## Claims

1. A communication apparatus, comprising:

   a channel estimator (38) to estimate channel parameters for a communication channel based on a signal received from the communication channel; and
   a performance estimator (42; 70) to estimate error rate information associated with the communication apparatus;
   a quality measure target-generator (44) to generate a quality measure target value for the communication apparatus using channel parameters estimated by said channel estimator (38) before said error rate information of the communication apparatus is available and when said error rate information is available, said quality measure target value representing a desired value for a quality measure associated with the communication apparatus;
   the communication apparatus **characterised by**
   a further quality measure target-generator to determine a further quality measure target value associated with a further communication channel; and
   a site selection diversity transmit manager (82) coupled to the quality measure target generators to receive the quality measure target values, wherein the site selection diversity transmit manager (82) determines which communication channel is suitable for further communication based on the quality measure target values.

2. The apparatus of claim 1, wherein:

   said apparatus is part of a code division multiple access (CDMA) system.

3. The apparatus of claim 1, further comprising:

   a target correction unit (58; 72) coupled to said performance estimator (42; 70) to generate a correction term from the error rate information;
   a quality measure target estimator (56) coupled to said channel estimator to determine an estimated quality measure target value; and
   a combination unit (60) coupled between the target correction unit (58; 72) and the quality measure target estimator (56) to sum the correction term with the estimated quality measure target value to correct the quality measure target value.

4. The apparatus of claim 1, wherein said performance estimator (42; 70) estimates a receive error rate of the communication apparatus and said quality measure target generator (44) uses said receive error rate to generate the quality measure target value.

5. The apparatus of claim 1, wherein a target correction unit (58, 72) corrects the quality measure target value based on the error rate information when the error rate information is available..

6. The apparatus of claim 1, further comprising:

   an antenna (34) to receive a signal from a communication channel; and
   a despreader (64) coupled to the antenna (34) to despread the signal using code division multiple access techniques, wherein the channel estimator (38) is coupled to the despreader (64) to estimate channel parameters for the communication channel based on information from the despreader (64).

7. The apparatus of any of claims 1, 2, or 4, wherein said quality measure target-generator (44) includes:

   a quality measure target estimator (56) to determine an estimated quality measure target value using channel parameters estimated by said channel estimator (38); and
   a target correction unit (58; 72) to correct said estimated quality measure target value based on said error rate information.

8. The apparatus of any preceding claim, wherein said channel estimator (38) estimates at least one of the following:

   the number of paths in the communication channel;
   the strengths of paths in the communication channel;

the relative velocity of the communication apparatus;

the fading rates of paths in the communication channel;

symbol energy variances in the communication channel; and

variances between symbols of different blocks within the communication channel.

9. The apparatus of any preceding claim, wherein said error rate information is selected from the group consisting of one or more of cyclic redundancy check (CRC) error information, a block error rate, a bit error rate, and a symbol error rate, in any combination.

10. The apparatus of claim 7, further comprising:

a rake receiver (60) coupled to the despreader (64) to isolate multipath components associated with a particular base station and to combine the components coherently;

a decoder (68) coupled to the rake receiver (60) to decode a signal from the rake receiver (60) into decoded signal information; and

a cyclic redundancy check (CRC) unit (70) coupled between the decoder (68) and the target correction unit (72) to detect and quantify CRC errors from the decoded signal information.

11. The apparatus of any preceding claim, wherein said quality measure target generator (44) generates said quality measure target value using symbol energy variance information associated with the communication channel.

12. The apparatus of any preceding claim, further comprising a quality measure estimator (40) to estimate a quality measure value for the signal received from the communication channel.

13. The apparatus of claim 12, further comprising a message generator (48) to generate a power control message based on the estimated quality measure value and the quality measure target value.

14. The apparatus of any preceding claim, wherein said quality measure target generator (44) generates a signal to interference ratio (SIR) target value.

15. The apparatus of claim 1, further comprising:

a cyclical redundancy check unit (70) that quantifies cyclical redundancy check errors based on a decoded transmission signal;

a target correction unit (72) that updates a target correction term based on said cyclical redundancy check errors; and

a combination unit (60) that generates a corrected quality measure target value based on said quality measure target value and said target correction term.

16. A base station transceiver comprising at least one communication apparatus of any of claims 1 to 15.

17. A mobile communicator comprising at least one communication apparatus of any of claims 1 to 15.

18. A method for generating a quality measure target value within a communication apparatus, comprising:

estimating channel parameters for a communication channel based on a signal received from the communication channel; and

estimating error rate information associated with the communication apparatus;

calculating the quality measure target value using the estimated channel parameters before said error rate information of the communication apparatus is available and when said error rate information is available;

the method **characterised by**

estimating a further quality measure target value associated with a second communication channel; and

determining which communication channel is suitable for further communication based on the quality measure target values.

19. The method of claim 18, further comprising correcting the quality measure target value based on the error rate information when the error rate information is available.

20. The method of claims 18 or 19, wherein calculating the quality measure target value includes determining an estimated quality measure target value using the estimated channel parameters.

21. The method of claim 20, further comprising:

generating a correction term from the error rate information; and summing the correction term with the estimated quality measure target value to correct the quality measure target value.

22. The method of any of claims 18 to 21, wherein said error rate information is selected from the group consisting of one or more of cyclic redundancy check (CRC) error information, a block error rate, a bit error rate, and a symbol error rate, in any combination.

23. The method of any of claims 18 to 22, wherein estimating channel parameters includes estimating at least one of the following:

the number of paths in the communication channel;

the strengths of paths in the communication channel;

the relative velocity of the communication apparatus;

the fading rates of paths in the communication channel;

symbol energy variances in the communication channel; and

variances between symbols of different blocks within the communication channel.

24. The method of any of claims 18 to 23, wherein calculating the quality measure target value includes calculating a signal to interference ratio (SIR) target.

25. A communications system comprising at least one base station in accordance with claim 16 and at least one mobile communicator in accordance with claim 17.

**Patentansprüche**

1. Kommunikationsvorrichtung, umfassend:

einen Kanalschätzer (38), um Kanalparameter für einen Kommunikationskanal zu schätzen, basierend auf einem von dem Kommunikationskanal empfangenen Signal; und

einen Leistungsschätzer (42, 70), um die zu der Kommunikationsvorrichtung gehörende Fehlerrateninformation zu schätzen;

einen Qualitätsmaßzielgenerator (44), um mithilfe der von dem Kanalschätzer (38) geschätzten Kanalparameter einen Qualitätsmaßzielwert für die Kommunikationsvorrichtung zu erzeugen, bevor die Fehlerrateninformation der Kommunikationsvorrichtung verfügbar ist, und wenn die Fehlerrateninformation verfügbar ist, wobei der Qualitätsmaßzielwert einen gewünschten Wert für ein zu der Kommunikationsvorrichtung gehörendes Qualitätsmaß darstellt; wobei die Kommunikationsvorrichtung **gekennzeichnet ist durch**

einen weiteren Qualitätsmaßzielgenerator, um einen weiteren Qualitätsmaßzielwert zu bestimmen, der zu einem weiteren Kommunikationskanal gehört; und

einen Standortauswahldiversitätssendemanager (82), der mit den Qualitätsmaßzielgeneratoren gekoppelt ist, um die Qualitätsmaßzielwerte zu empfangen, wobei der Standortauswahldiversitätssendemanager (82) basierend auf den Qualitätsmaßzielwerten bestimmt, welcher Kommunikationskanal für die weitere Kommunikation geeignet ist.

2. Vorrichtung nach Anspruch 1, wobei:

die Vorrichtung Teil eines Codemultiplexsystems (CDMA) ist.

3. Vorrichtung nach Anspruch 1, ferner umfassend:

eine Zielkorrektureinheit (58, 72), die mit dem Leistungsschätzer (42, 70) gekoppelt ist, um aus der Fehlerrateninformation einen Korrekturterm zu erzeugen;

einen Qualitätsmaßzielschätzer (56), der mit dem Kanalschätzer gekoppelt ist, um einen geschätzten Qualitätsmaßzielwert zu bestimmen; und

eine Kombinationseinheit (60), die zwischen der Zielkorrektureinheit (58, 72) und dem Qualitätsmaßzielschätzer (56) gekoppelt ist, um den Korrekturterm mit dem geschätzten Qualitätsmaßzielwert zusammenzufassen, um den Qualitätsmaßzielwert zu korrigieren.

4. Vorrichtung nach Anspruch 1, wobei der Leistungsschätzer (42, 70) eine Empfangsfehlerrate der Kommunikationsvorrichtung schätzt und der Qualitätsmaßzielgenerator (44) die Empfangsfehlerrate verwendet, um den Qualitätsmaßzielwert zu erzeugen.

5. Vorrichtung nach Anspruch 1, wobei eine Zielkorrektureinheit (58, 72) den Qualitätsmaßzielwert basierend auf der Fehlerrateninformation korrigiert, wenn die Fehlerrateninformation verfügbar ist.

6. Vorrichtung nach Anspruch 1, ferner umfassend:

eine Antenne (34), um ein Signal aus einem Kommunikationskanal zu empfangen; und

einen Entspreizer (64), der mit der Antenne (34) gekoppelt ist, um das Signal mithilfe von Codemultiplexverfahren zu entspreizen, wobei der Kanalschätzer (38) mit dem Entspreizer (64) gekoppelt ist, um basierend auf den Informationen des Entspreizers (64) die Kanalparameter für den Kommunikationskanal zu schätzen.

7. Die Vorrichtung nach einem der Ansprüche 1, 2 oder 4, wobei der Qualitätsmaßzielwertgenerator (44) umfasst:

einen Qualitätsmaßzielschätzer (56), um einen geschätzten Qualitätsmaßzielwert mithilfe der von dem Kanalschätzer (38) geschätzten Kanalparameter zu bestimmen; und

eine Zielkorrektureinheit (58, 72), um den geschätzten Qualitätsmaßzielwert basierend auf der Fehlerrateninformation zu korrigieren.

8. Die Vorrichtung nach einem der vorangegangenen Ansprüche, wobei der Kanalschätzer (38) mindestens einen der folgenden Punkte schätzt:

die Anzahl an Pfaden in dem Kommunikationskanal;
die Stärken der Pfade in dem Kommunikationskanal;
die relative Geschwindigkeit der Kommunikationsvorrichtung;
die Schwundrate der Pfade in dem Kommunikationskanal;
die Symbolenergievarianzen in dem Kommunikationskanal; und
die Varianzen zwischen den Symbolen verschiedener Blöcke innerhalb des Kommunikationskanals.

9. Vorrichtung nach einem der vorangegangenen Ansprüche, wobei die Fehlerrateninformation ausgewählt wird aus der Gruppe, bestehend aus einem oder mehreren der folgenden Punkte: zyklische Redundanzprüfungs (CRC)-Fehlerinformationen, einer Blockfehlerrate, einer Bitfehlerrate und einer Symbolfehlerrate in beliebiger Kombination.

10. Vorrichtung nach Anspruch 7, ferner umfassend:

einen Rake-Empfänger (60), der mit dem Entspreizer (64) gekoppelt ist, um Mehrwegkomponenten zu isolieren, die zu einer speziellen Basisstation gehören und um die Komponenten kohärent zu kombinieren;
einen Dekodierer (68), der mit dem Rake-Empfänger (60) gekoppelt ist, um ein Signal vom Rake-Empfänger (60) in dekodierte Signalinformation zu dekodieren; und
eine zyklische Redundanzprüfungseinheit (CRC) (70), die zwischen den Dekodierer (68) und die Zielkorrektureinheit (72) gekoppelt ist, um CRC-Fehler aus der dekodierten Signalinformation zu erfassen und zu quantifizieren.

11. Vorrichtung nach einem der vorangegangenen Ansprüche, wobei der Qualitätsmaßzielgenerator (44) den Qualitätsmaßzielwert mithilfe der zu dem Kommunikationskanal gehörenden Symbolenergievarianzinformation erzeugt.

12. Vorrichtung nach einem der vorangegangenen Ansprüche, ferner umfassend einen Qualitätsmaßschätzer (40), um einen Qualitätsmaßwert für das vom Kommunikationskanal empfangene Signal zu schätzen.

13. Vorrichtung nach Anspruch 12, ferner umfassend einen Mitteilungsgenerator (48), um eine Leistungssteuerungsmitteilung basierend auf dem geschätzten Qualitätsmaßwert und dem Qualitätsmaßzielwert zu erzeugen.

14. Vorrichtung nach einem der vorangegangenen Ansprüche, wobei der Qualitätsmaßzielgenerator (44) einen Signal-Stör-Verhältnis (SIR)-Zielwert erzeugt.

15. Vorrichtung nach Anspruch 1, ferner umfassend:

eine zyklische Redundanzprüfungseinheit (70), die zyklische Redundanzprüfungsfehler basierend auf einem dekodierten Übertragungssignal quantifiziert;
eine Zielkorrektureinheit (72), die einen Zielkorrekturterm basierend auf den zyklischen Redundanzprüfungsfehlern aktualisiert; und
eine Kombinationseinheit (60), die einen korrigierten Qualitätsmaßzielwert basierend auf dem Qualitätsmaßzielwert und dem Zielkorrekturterm erzeugt.

16. Basisstationssendeempfänger umfassend mindestens eine Kommunikationsvorrichtung nach einem der Ansprüche 1 bis 15.

17. Mobiler Kommunikator umfassend mindestens eine Kommunikationsvorrichtung nach einem der Ansprüche 1 bis 15.

18. Verfahren zum Erzeugen eines Qualitätsmaßzielwertes innerhalb einer Kommunikationsvorrichtung, umfassend:

Schätzen von Kanalparametern für einen Kommunikationskanal basierend auf einem von dem Kommunikationskanal empfangenen Signal; und
Schätzen der zur Kommunikationsvorrichtung gehörenden Fehlerrateninformation;
Berechnen des Qualitätsmaßzielwertes mithilfe der geschätzten Kanalparameter, bevor die Fehlerrateninformation der Kommunikationsvorrichtung verfügbar ist und wenn die Fehlerrateninformation verfügbar ist;
wobei das Verfahren **gekennzeichnet ist durch**
Schätzen eines weiteren Qualitätsmaßzielwertes, der zu einem zweiten Kommunikationskanal gehört; und
Bestimmen, welcher Kommunikationskanal für die weitere Kommunikation geeignet ist, basierend auf den Qualitätsmaßzielwerten.

19. Verfahren nach Anspruch 18, ferner umfassend das Korrigieren des Qualitätsmaßzielwertes basierend auf der Fehlerrateninformation, wenn die Fehlerrateninformation verfügbar ist.

**20.** Verfahren nach Anspruch 18 oder 19, wobei das Berechnen des Qualitätsmaßzielwertes das Bestimmen eines geschätzten Qualitätsmaßzielwertes der geschätzten Kanalparameter beinhaltet.

**21.** Verfahren nach Anspruch 20, ferner umfassend:

Erzeugen eines Korrekturterms aus der Fehlerrateninformation; und
Zusammenfassen des Korrekturterms mit dem geschätzten Qualitätsmaßzielwert, um den Qualitätsmaßzielwert zu korrigieren.

**22.** Verfahren nach einem der Ansprüche 18 bis 21, wobei die Fehlerrateninformation ausgewählt wird aus der Gruppe, bestehend aus einem oder mehreren der folgenden Punkte: zyklische Redundanzprüfungs (CRC)-Fehlerinformationen, einer Blockfehlerrate, einer Bitfehlerrate und einer Symbolfehlerrate in beliebiger Kombination.

**23.** Verfahren nach einem der Ansprüche 18 bis 22, wobei das Schätzen der Kanalparameter das Schätzen mindestens einen der folgenden Punkte beinhaltet:

die Anzahl an Pfaden in dem Kommunikationskanal;
die Stärken der Pfade in dem Kommunikationskanal;
die relative Geschwindigkeit der Kommunikationsvorrichtung;
die Schwundrate der Pfade in dem Kommunikationskanal;
die Symbolenergievarianzen in dem Kommunikationskanal; und
die Varianzen zwischen den Symbolen verschiedener Blöcke innerhalb des Kommunikationskanals.

**24.** Verfahren nach einem der Ansprüche 18 bis 23, wobei das Berechnen des Qualitätsmaßzielwertes das Berechnen eines Signal-Stör-Verhältnis (SIR)-Zieles beinhaltet.

**25.** Kommunikationssystem umfassend mindestens eine Basisstation nach Anspruch 16 und mindestens einen mobilen Kommunikator nach Anspruch 17.

**Revendications**

**1.** Appareil de communication, comprenant :

un estimateur de canal (38) pour estimer des paramètres de canal pour un canal de communication sur la base d'un signal reçu du canal de communication ; et un estimateur de performance (42 ; 70) pour estimer des informations de taux d'erreur associées à l'appareil de communication ;
un générateur de valeur cible de mesure de qualité (44) pour générer une valeur cible de mesure de qualité pour l'appareil de communication en utilisant des paramètres de canal estimés par ledit estimateur de canal (38) avant que lesdites informations de taux d'erreur de l'appareil de communication ne soient disponibles et lorsque lesdites informations de taux d'erreur sont disponibles, ladite valeur cible de mesure de qualité représentant une valeur souhaitée pour une mesure de qualité associée à l'appareil de communication ;
l'appareil de communication étant **caractérisé par** :
un autre générateur de valeur cible de mesure de qualité pour déterminer une autre valeur cible de mesure de qualité associée à un autre canal de communication ; et
un gestionnaire de transmission de diversité de sélection de site (82) couplé aux générateurs de valeur cible de mesure de qualité pour recevoir les valeurs cible de mesure de qualité, dans lequel le gestionnaire de transmission de diversité de sélection de site (82) détermine le canal de communication qui est adapté pour une autre communication sur la base des valeurs cible de mesure de qualité.

**2.** Appareil selon la revendication 1, dans lequel :

ledit appareil fait partie d'un système d'accès multiple par répartition en code (CDMA).

**3.** Appareil selon la revendication 1, comprenant en outre :

une unité de correction de valeur cible (58 ; 72) couplée au dit estimateur de performance (42 ; 70) pour générer un terme de correction à partir des informations de taux d'erreur ;
un estimateur de valeur cible de mesure de qualité (56) couplé au dit estimateur de canal pour déterminer une valeur cible de mesure de qualité estimée ; et
une unité de combinaison (60) couplée entre l'unité de correction de valeur cible (58 ; 72) et l'estimateur de valeur cible de mesure de qualité (56) pour sommer le terme de correction avec la valeur cible de mesure de qualité estimée pour corriger la valeur cible de mesure de qualité.

**4.** Appareil selon la revendication 1, dans lequel ledit estimateur de performance (42 ; 70) estime un taux d'erreur de réception de l'appareil de communication et ledit générateur de valeur cible de mesure de qualité (44) utilise ledit taux d'erreur de réception pour générer la valeur cible de mesure de qualité.

5. Appareil selon la revendication 1, dans lequel une unité de correction de valeur cible (58 ; 72) corrige la valeur cible de mesure de qualité sur la base des informations de taux d'erreur lorsque les informations de taux d'erreur sont disponibles.

6. Appareil selon la revendication 1, comprenant en outre :

une antenne (34) pour recevoir un signal d'un canal de communication ; et
un étaleur (64) couplé à l'antenne (34) pour étaler le signal en utilisant des techniques d'accès multiple par répartition en code, dans lequel l'estimateur de canal (38) est couplé à l'étaleur (64) pour estimer des paramètres de canal pour le canal de communication sur la base des informations de l'étaleur (64).

7. Appareil selon l'une quelconque des revendications 1, 2 ou 4, dans lequel ledit générateur de valeur cible de mesure de qualité (44) comprend :

un estimateur de valeur cible de mesure de qualité (56) pour déterminer une valeur cible de mesure de qualité estimée en utilisant des paramètres de canal estimés par ledit estimateur de canal (38) ; et
une unité de correction de valeur cible (58 ; 72) pour corriger ladite valeur cible de mesure de qualité estimée sur la base desdites informations de taux d'erreur.

8. Appareil selon l'une quelconque des revendications précédentes, dans lequel ledit estimateur de canal (38) estime au moins l'un de ce qui suit :

le nombre de chemins dans le canal de communication ;
les forces des chemins dans le canal de communication ;
la vélocité relative de l'appareil de communication ;
les taux d'évanouissement des chemins dans le canal de communication ;
des variances d'énergie de symboles dans le canal de communication ; et des variances entre des symboles de différents blocs dans le canal de communication.

9. Appareil selon l'une quelconque des revendications précédentes, dans lequel lesdites informations de taux d'erreur sont sélectionnées à partir du groupe se composant d'une ou plusieurs informations d'erreur de contrôle de redondance cyclique (CRC), d'un taux d'erreur bloc, d'un taux d'erreur binaire et d'un taux d'erreur symbole, dans n'importe quelle combinaison.

10. Appareil selon la revendication 7, comprenant en outre :

un récepteur RAKE (60) couplé à l'étaleur (64) pour isoler des, composants à chemins multiples associés à une station de base particulière et pour combiner les composants de manière cohérente ;
un décodeur (68) couplé au récepteur RAKE (60) pour décoder un signal du récepteur RAKE (60) en informations de signal décodées ; et
une unité de contrôle de redondance cyclique (CRC) (70) couplée entre le décodeur (68) et l'unité de correction de valeur cible (72) pour détecter et quantifier des erreurs de CRC à partir des informations de signal décodées.

11. Appareil selon l'une quelconque des revendications précédentes, dans lequel ledit générateur de valeur cible de mesure de qualité (44) génère ladite valeur cible de mesure de qualité en utilisant des informations de variances d'énergie de symboles associées au canal de communication.

12. Appareil selon l'une quelconque des revendications précédentes, comprenant en outre un estimateur de mesure de qualité (40) pour estimer une valeur de mesure de qualité pour le signal reçu à partir du canal de communication.

13. Appareil selon la revendication 12, comprenant en outre un générateur de message (48) pour générer un message de contrôle de la puissance sur la base de la valeur de mesure de qualité estimée et de la valeur cible de mesure de qualité.

14. Appareil selon l'une quelconque des revendications précédentes, dans lequel ledit générateur de valeur cible de mesure de qualité (44) génère une valeur cible de rapport de signal sur interférences (SIR).

15. Appareil selon la revendication 1, comprenant en outre :

une unité de contrôle de redondance cyclique (70) qui quantifie des erreurs de contrôle de redondance cyclique sur la base d'un signal de transmission décodé ;
une unité de correction de valeur cible (72) qui met à jour un terme de correction de valeur cible sur la base desdites erreurs de contrôle de redondance cyclique ; et une unité de combinaison (60) qui génère une valeur cible de mesure de qualité corrigée sur la base de ladite valeur cible de mesure de qualité et dudit terme de correction de valeur cible.

16. Emetteur-récepteur de station de base comprenant au moins un appareil de communication selon l'une quelconque des revendications 1 à 15.

17. Communicateur mobile comprenant au moins un appareil de communication selon l'une quelconque des revendications 1 à 15.

18. Procédé pour générer une valeur cible de mesure de qualité dans un appareil de communication, comprenant les étapes consistant à :

estimer des paramètres de canal pour un canal de communication sur la base d'un signal reçu à partir du canal de communication ; et estimer des informations de taux d'erreur associées à l'appareil de communication ; calculer la valeur cible de mesure de qualité en utilisant les paramètres de canal estimés avant que lesdites informations de taux d'erreur de l'appareil de communication ne soient disponibles et lorsque lesdites informations de taux d'erreur sont disponibles ; le procédé étant **caractérisé par** les étapes consistant à : estimer une autre valeur cible de mesure de qualité associée à un deuxième canal de communication ; et déterminer le canal de communication qui est adapté pour une autre communication sur la base des valeurs cible de mesure de qualité.

19. Procédé selon la revendication 18, comprenant en outre l'étape consistant à corriger la valeur cible de mesure de qualité sur la base des informations de taux d'erreur lorsque les informations de taux d'erreur sont disponibles.

20. Procédé selon la revendication 18 ou 19, dans lequel le calcul de la valeur cible de mesure de qualité comprend l'étape consistant à déterminer une valeur cible de mesure de qualité estimée en utilisant les paramètres de canal estimés.

21. Procédé selon la revendication 20, comprenant en outre les étapes consistant à : générer un terme de correction à partir des informations de taux d'erreur ; et sommer le terme de correction avec la valeur cible de mesure de qualité estimée pour corriger la valeur cible de mesure de qualité.

22. Procédé selon l'une quelconque des revendications 18 à 21, dans lequel lesdites informations de taux d'erreur sont sélectionnées à partir du groupe se composant d'une ou plusieurs informations d'erreur de contrôle de redondance cyclique (CRC), d'un taux d'erreur bloc, d'un taux d'erreur binaire et d'un taux d'erreur symbole, dans n'importe quelle combinaison.

23. Procédé selon l'une quelconque des revendications 18 à 22, dans lequel l'estimation des paramètres de canal comprend l'étape consistant à estimer au moins l'un de ce qui suit :

le nombre de chemins dans le canal de communication ; les forces des chemins dans le canal de communication ; la vélocité relative de l'appareil de communication ; les taux d'évanouissement des chemins dans le canal de communication ; des variances d'énergie de symboles dans le canal de communication ; et des variances entre des symboles de différents blocs dans le canal de communication.

24. Procédé selon l'une quelconque des revendications 18 à 23, dans lequel le calcul de la valeur cible de mesure de qualité comprend l'étape consistant à calculer une valeur cible de rapport de signal sur interférences (SIR).

25. Système de communication comprenant au moins une station de base selon la revendication 16 et au moins un communicateur mobile selon la revendication 17.

**FIG. 1**

(PRIOR ART)

32

34

36
RECEIVER

42
PERFORMANCE
ESTIMATOR

38
CHANNEL
ESTIMATOR

CHANNEL
PARAMETERS

44
SIR TARGET
GENERATOR

SIR TARGET  +

−

46

40
SIR
ESTIMATOR

SIR ESTIMATE

48
MESSAGE
GENERATOR

52

50
TRANSMITTER

## FIG. 2

54

34

36
RECEIVER

42
PERFORMANCE
ESTIMATOR

58
SIR TARGET
CORRECTION

38
CHANNEL
ESTIMATOR

56
SIR TARGET
ESTIMATOR

SIR
TARGET
ESTIMATE  +

+

60

40
SIR
ESTIMATOR

SIR TARGET  +

−

46

SIR ESTIMATE

48
MESSAGE
GENERATOR

52

50
TRANSMITTER

## FIG. 3

FIG. 4

EP 1 456 966 B1

EP 1 456 966 B1

FIG. 5

**EP 1 456 966 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0120808 A
- US 6167282 A